(19) Europäisches Patentamt
European Patent Office
Office européen des brevets

(11) EP 2 942 098 B1

(12) **EUROPEAN PATENT SPECIFICATION**

(45) Date of publication and mention of the grant of the patent:
**17.04.2019 Bulletin 2019/16**

(51) Int Cl.:
***B01D 53/58*** *(2006.01)* *C02F 101/16* *(2006.01)*
*C02F 103/18* *(2006.01)*

(21) Application number: **14182583.6**

(22) Date of filing: **28.08.2014**

(54) **IMPROVED METHOD FOR REMOVING NITRITE**

VERBESSERTE VERFAHREN ZUR ENFERNUNG VON NITRIT

MÉTHODE AMÉLIORÉ POUR L'ENLÈVEMENT DE NITRITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2014 BE 201400323**

(43) Date of publication of application:
**11.11.2015 Bulletin 2015/46**

(73) Proprietors:
- **Avecom N.V.**
**8730 Beernem (BE)**
- **CB Groep bvba**
**8840 Staden (BE)**

(72) Inventors:
- **Verstraete, Willy**
**8730 Beernem (BE)**
- **Crombez, Stijn**
**8840 Staden (BE)**

(74) Representative: **Brantsandpatents bvba**
**Pauline Van Pottelsberghelaan 24**
**9051 Ghent (BE)**

(56) References cited:
**CN-A- 101 481 170**
**DE-U1-202011 000 946**
**GB-A- 2 171 688**
**JP-A- 2005 161 258**
**US-A- 4 968 436**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 942 098 B1

## Description

### TECHNICAL FIELD

The present invention relates to an improved method for removing nitrite from a liquid, such as, for example, coming from washing of air which comes from fertilizer processing, biogas plants, composting processes, livestock farming or industrial processes, more specifically wherein ammonia, amines and related unwanted nitrogen gases are extracted from air and fully or partially converted into less hindersome, substantially neutral ($N_2$) nitrogen gases. The method is more environmentally friendly than existing processes as the residue consists mainly of air nitrogen, and the normal amounts of washing water to be discharged are significantly reduced.

### STATE OF THE ART AND BACKGROUND

Reducing ammonia emissions is necessary within the framework of the problems concerning acid rain and eutrophication. The total ammonia emission in Flanders amounts to about 50,000 tons per year, a major part of this ammonia is released from intensive livestock farming.

An air washer is used in mechanically ventilated stables in the intensive livestock farming to reduce the emissions of ammonia and substances which harm the environment.

In a biological air washer, ammonia coming from the air is entrapped in the aqueous phase and subsequently oxidized by bacteria to primarily nitrite ($NO_2$) and nitrate ($NO_3^-$). As a result, the nitrite present in the washing liquid from the air washer accumulates. High concentrations of nitrite inhibit the biological activity and thus also the conversion of ammonia into nitrite by the micro-organisms in the air washer. These biological processes may also be inhibited by the presence of non-protonated ammonia, $NH_3$ (aq), and nitrous acid, $HNO_2$ in the washing liquid. In order to prevent inhibition of the biological activity, a part of the water is continuously or periodically discharged and refilled with fresh water, thereby keeping the concentration of ammonia and nitrite low. The nitrogen compounds are discharged together with the discharge water out of the air washing system. In some cases, a biological air washer is combined with an additional denitrification unit in order to remove the nitrite present in the washing liquid and thus to reduce the amount of discharge water.

In the interest of completeness, chemical air washers should be classified into acidic, basic or oxidizing washers. In the livestock farming almost exclusively acidic chemical air washers are used. In an acidic chemical air washer, the solubility of ammonia in water is increased converting the free ammonia into salt form, more specifically in ammonium sulfate, by means of a chemical acid such as sulfuric acid. This conversion is only possible at a sufficiently low pH (acidic environment) and is limited by the accumulating salt concentration. Therefore, acid should be added regularly, and, as in the biological air washer, discharge water should regularly be discharged.

EP 2 308 583 discloses, for example, a method for a washing treatment of air from a livestock stable, wherein ammonia can be removed by means of an acid-comprising liquid, preferably comprising sulfuric acid. It should be noted that concentrated sulfuric acid is not environmentally friendly and highly corrosive as a result of which the air washer should be made of a corrosion-resistant material and safety precautions need to be taken for the storage and supply of concentrated sulfuric acid.

From a process-technical point of view, also other acids, such as, for example, hydrochloric acid or organic acids such as acetic acid can be used in a chemical air washer. However, in addition to economic disadvantages, also other disadvantages are associated with said use. In this way, for safety considerations, hydrochloric acid is not used as it may lead to emissions of chloride compounds. The disadvantage of using organic acids is that in general these acids have an odor themselves, as a result of which the odor emission of such an air washer is potentially higher than that of an air washer in which an inorganic acid is used.

While chemical air washers may achieve a higher ammonia removal efficiency than biological air washers, the odor removal efficiency of biological air washers is generally higher than for acid chemical air washers.

In combination air washers, combinations of different techniques are used one after the other with the aim of obtaining additional reduction of odor and/or dust emission, producing less washing water or other advantages obtainable with respect to the singular chemical or biological air washer.

Discharge water from air washers is considered as being aqueous fertilizer or waste water flow. Consequently, there is a cost for storage, transport and use or processing of the discharge water. It is therefore desirable to find a way to decrease the amount of discharge water in a way that the ammonia removal efficiency is not jeopardized.

JP 2005 161258 A discloses a device which is provided with a microorganism carrier storage vessel in which a microorganism carrier with ammonia oxidation bacteria for converting ammonia to nitrite is stored and introduction of ammonia gas can be carried out; a sprinkling facility for sprinkling water to the microorganism carrier storage vessel; a circulation water storage vessel for recovering and storing the water sprinkled to the microorganism carrier storage vessel as circulation water; means for adjusting the ammonium ion concentration or nitrite base nitrogen concentration

of the circulation water; and sprinkling lines for transferring the circulation water to the sprinkling facility. The microorganism carrier storage vessel is made environment suitable for the ammonia oxidation bacteria and unsuitable for the nitrite oxidation bacteria and activity of the nitrite oxidation bacteria is suppressed while maintaining the activity of the ammonia oxidation bacteria to stably convert ammonia to the nitrite-form nitrogen.

DE 20 2011 000946 U1 discloses an exhaust air cleaning system, particularly for a farm animal stall, comprising means for feeding a crude gas stream to be cleaned; one in the gas flow direction first purification stage in which the exhaust air is contacted with a washing fluid, and microorganisms are provided which are able to convert at least a portion of the ammonia contained in the exhaust air to nitrite, wherein there are also provided in the air purification system: a reaction vessel for conversion of ammonium ions and nitrite ions to form gaseous nitrogen; a connecting line for the transport of washing liquid from the first purification stage to the reaction vessel; a pump for washing liquid from the first cleaning stage to promote via the connecting line in the reaction vessel; a sensor for detecting the conductivity of the washing liquid in the first purification stage; a control device, which communicates with the sensor for detecting the conductivity of the washing liquid in the first purification stage of signal technology in connection and is designed to control the pump in such a that when exceeding a certain threshold of the conductivity washing liquid from the first cleaning stage via the connecting line in the is conveyed to the reaction vessel reacting at least a portion of the ammonium contained in the washing liquid nitrite ions to form a nitrogen-containing gas.

CN 101 481 170 A discloses application of sulfamic acid for degrading nitrite and decreasing pH value of aquatic cultivation water, which belongs to the technical field of aquatic cultivation water protection. CN 101 481 170 A aims to provide the new application of sulfamic acid for degrading nitrite and decreasing pH value of cultivation water. When the sulfamic acid is used for degrading the nitrite in cultivation water, the effective dosage of the sulfamic acid is 0.1g/m to 5.0g/m, and when the sulfamic acid is used for decreasing the pH value in the cultivation water, the effective dosage sulfamic acid is 0.3 g/m to 5.0 g/m.

US 4 968 436 A discloses a method for the treatment of sewage containing nitrites comprising the reduction of the nitrite with urea in an acid medium it is provided, to obtain end products friendly to the environment and an economic conduction of the method, that a greatly acid urea solution be supplied and circulated through a pipe reactor, and that the sewage containing nitrite to be treated should be injected into the pipe reactor. Furthermore, US 4 968 436 A relates to a device for carrying out the method and to an examination device which is particularly suitable for the periodic determination of the nitrite content in a circulation duct.

GB 2 171 688 A discloses a detoxification which is carried out by amidosulphuric acid ($NH_2SO_3H$) in a reaction vessel in which an amidosulphuric acid starting solution with a pH value of about 5> pH >/= 2 is introduced first and the nitrite liquor is then sprayed in at several points below the liquid level, crystalline amidosulphuric acid being added simultaneously onto the surface such that a pH value between about 5> pH >/= 2 is maintained.

The current state of the art does not or does not sufficiently provide a solution for one or more of the above-mentioned problems or shortcomings.

## SUMMARY OF THE INVENTION

The invention provides a method for removing nitrite from a liquid, comprising the following steps:

(a) providing nitrite-comprising liquid, coming from the oxidation of ammonia in an aqueous solution, wherein the ammonia in aqueous solution comes from washing ammonia-comprising air;
(b) adding an amount of a nitrite-converting substance to the nitrite-comprising liquid, thereby converting nitrite into nitrogen gas, wherein the nitrite-converting substance comprises an amine group or amide group and a sulfamic group, and is capable of forming diazo compounds,

wherein the liquid comprises a pH-value which is lower than 5.9, wherein the nitrite-converting substance is sulfamic acid or a salt thereof, and wherein the oxidation of ammonia in an aqueous solution is performed by micro-organisms.

As a result, the nitrite is converted into gaseous nitrogen compounds, essentially into harmless nitrogen gas.

In a preferred embodiment, an amount of the nitrite-converting substance may be added in the ammonia-comprising air, for example, via a spray.

In a particularly preferred embodiment, sulfamic acid, CAS 5329-14-6, is added to the nitrite-comprising liquid, the nitrite is hereby at least partly removed from the liquid via the reaction:

$$NH_2SO_3H + HNO_2 \rightarrow N_2 + H_2O + H_2SO_4 \qquad (1)$$

wherein sulfamic acid ($NH_2SO_3H$) is able to convert the nitrite ($NO_2^-$) in the nitrous acid ($HNO_2$) into nitrogen gas (i.c. $N_2$) and sulfuric acid ($H_2SO_4$) with the formation of water ($H_2O$). The conversion is essentially chemical in nature, yet the microbiological material present in the washing liquid and on the carrier material is able to catalyze this reaction.

The nitrite-comprising liquid comes from washing ammonia-comprising air. Washing ammonia from air is an important source of nitrite-rich water flows. The presence of nitrite in these water flows is generally undesirable, and normally makes it necessary to discharge the liquid. The present invention makes it possible to treat the nitrite-comprising water flows, and in particular, nitrite-comprising waste flows coming from washing ammonia-comprising air, in situ or at least close to the origin of the nitrite-rich water flows.

An additional advantage of the present invention is that the treated liquid may be re-used. Therefore, in a preferred embodiment, the invention comprises the step of:

(c) re-using the treated liquid, preferably for washing ammonia-comprising air. By re-using the liquid, the amount of discharge water is greatly reduced and using an air washer is less labor-intensive.

The nitrite-comprising liquid is coming from an air washer for washing ammonia-comprising air. The air washer is preferably a chemical air washer, a combination air washer, and more preferably a biological air washer. The treated liquid has a low nitrite concentration. Especially a biological air washer would benefit from a low nitrite concentration in the liquid as a result of which there is less inhibition of the biological activity.

According to a further aspect, the present invention comprises using a method as described herein for treating ammonia-comprising air coming from fertilizer processing, biogas plants, composting processes, livestock farming or industrial processes.

Further preferred embodiments are described in the claims and further in this document.

## DESCRIPTION OF THE FIGURES

Figure 1 is a diagrammatical illustration of a method according to the present invention and a system.

## DETAILLED DESCRIPTION OF THE INVENTION

The explicit characteristics, advantages and objectives of the present invention will become further apparent to those skilled in the art in the technical field of the invention upon reading the following detailed description of the embodiment of the invention and of the figures enclosed herein. The figures therefore serve to further illustrate the invention, without limiting the scope of the invention.

Unless otherwise defined, all terms used in the description of the invention, including technical and scientific terms, have the meaning as commonly understood by those skilled in the art in the technical field of the invention. For a better assessment of the description of the invention, the following terms are explained explicitly.

"A", "an" and "the" in this document refer to both the singular and the plural, unless the context clearly implies otherwise. For example, "a segment" means one or more than one segment.

Where "about" or "around" are used in this document with a measurable quantity, a parameter, a time or time period, and the like, variations are meant of +/-20% or less, preferably +/-10% or less, more preferably +/-5% or less, even more preferably +/-1% or less, and even more preferably +/-0.1 % or less than one of the cited value, to the extent that such variations apply in the described invention. It should, however, be understood that the value of the quantity in which the term "about" or "around" is used, is itself specifically disclosed.

The terms "comprise", "comprising", "consist of", "consisting of", "provided with", "include", "including", "contain", "containing" are synonyms and are inclusive or open terms that indicate the presence of what follows, and which do not preclude or prevent the presence of other components, features, elements, members, steps, as known from and described in the prior art.

The citing of numerical intervals by endpoints comprises all integers, fractions, and/or real numbers between the endpoints, these endpoints included.

The term "nitrification" is the process in a biological air washer wherein the entrapped ammonia ($NH_3$) is converted into nitrite ($NO_2$-) and/or nitrate ($NO_3$-).

The term "denitrification" is the process wherein the formed nitrite and/or nitrate is converted into nitrogen gas.

The term "chemically-biologically" refers in this document to a chemical reaction wherein a biological material intervenes, either catalytic or not.

The term "washing liquid" refers in this document to the liquid which is used to wash the ammonia-comprising air, it refers to the liquid in which the ammonia, coming from the air, is dissolved for conversion into nitrite and/or nitrate and optionally other and/or further conversions. The washing liquid may be at least partially re-used or recirculated to dissolve ammonia from air therein.

The term "discharge water" refers in this document to a part of the washing liquid which is no longer re-used to wash air and thus is discharged, for example, to a discharge water silo.

The term "nitrite-converting substance" refers in this document to a substance which is able to chemically convert nitrite into nitrogen gas. The substance is preferably a diazo-forming substance, which forms a diazo compound with nitrite and in that way, removes nitrite from the nitrate-comprising liquid and is preferably a nitrogen-comprising

substance, more preferably an amine-comprising or an amide-comprising substance, more preferably a substance comprising an amine group or amide group on the one hand, and a sulfonyl group, sulfate group, sulfite group, persulfate group, hyposulfite group, peroxydisulfate group, thiosulfate group, thiocyanate group, perchlorate group, chlorate group, chlorite group, hypochlorite group, phosphonic group, phosphate group, phosphite group, hypophosphite group, carbonate group, silicate group, borate group, bromate group, perbromate group, bromite group, hypobromite group, iodate group, iodite group, periodate group, hypoiodite group, chromate group, cyanate group or permanganate group on the other hand, even more preferably a sulfamic group-comprising substance, most preferably sulfamic acid, also called sulfamidic acid or amidosulfonic acid or a salt of any of the preceding.

The term "mineral acid" or "inorganic acid" are used as synonyms in this document, and refer to acid which is derived from a specific inorganic compound. Examples of mineral acids are carbonic acid, nitric acid, nitrous acid, sulfuric acid, sulfamic acid, hydrochloric acid, etc.

The term "buffer" refers in this document to an aqueous solution of two substances, i.e. buffer substances, which are in a certain balance and take a specific pH. Upon diluting, adding an acid or a base, this pH will remain nearly constant. Hence, the disturbance of the balance and the acidity is "buffered". Buffer solutions preferably consist of an acid/base pair; either an acid and the salt of its conjugated base, e.g. sulfamic acid and ammonium sulfamate, or a base and the salt of its conjugated acid. Both are preferably weak acids or bases and thus will react incompletely. The reaction equation between the acid and the base can be given as:

$$HA_{(aq)} \leftrightarrow A^{-}_{(aq)} + H^{+}_{(aq)}$$

The extent to which this reaction takes place, is given by the Ka value or acid dissociation constant in terms of concentrations, denoted by "[.]":

$$K_a = \frac{[H^+][A^-]}{[HA]}$$

or the related pKa value:

$$pK_a = -\log(K_a).$$

The term "nitrogen oxides" refers in this document to neutral compound of nitrogen and oxygen, and are commonly designated as "NOx", for example, in structural formulas. The exact structural formula of nitrogen oxides is $N_yO_x$, wherein x and y are strictly positive integers. Examples are nitrogen monoxide (NO), nitrogen dioxide ($NO_2$), nitrous oxide ($N_2O$), dinitrogen trioxide ($N_2O_3$), dinitrogen tetroxide ($N_2O_4$), dinitrogen pentoxide ($N_2O_5$), nitrogen trioxide ($NO_3$), etc.

The present invention provides a method for the treatment of nitrate-comprising liquid coming from washing ammonia-comprising air. The invention further also provides a method for washing air wherein discharge water production is reduced because of an improved denitrification process in the air washer, as described in the claims. This offers the advantage that the discharge water consumption is limited because of the fact that the washing liquid can be re-used to a large extent for a next wash cycle of the air. The invention therefore relates to a method which is environmentally friendly and cost-effective.

In a preferred embodiment, at least a part of the washing liquid is directed to the reactor. In a further preferred embodiment, said part is drained continuously. In another preferred embodiment, the part is drained as soon as the liquid comprises a nitrite level which higher than a, preferably predetermined, limit. In the reactor, the nitrite is then chemically-biologically converted into nitrogen gases. In another preferred embodiment, the chemical-biological conversion of nitrite into nitrogen gas takes place in a zone of the air washer itself.

In a preferred embodiment, a nitrite-converting substance is added in a reactor provided thereto or the substance is added via the air washer connected to the reactor. This is possible by spraying the nitrite-converting substance in the air washer.

In a preferred embodiment, the liquid comprises a pH-value close to the pKa-value of nitrous acid, more preferably, the difference between said pH-value and the pKa-value of nitrous acid is less than 3, more preferably less than 2, even more preferably less than 1 unit, even more preferably less than 0.75; and yet more preferably less than 0.5 of the pKa-value of nitrous acid. As a result, the denitrification of the washing liquid is enhanced. The method therefore offers the advantage that the nitrite inhibition of the growth of the micro-organisms is significantly reduced.

According to the invention, the liquid comprises in the reactor a pH-value which is lower than 5.9. The acidic environment and the nitrite-converting substance will ensure that both the nitrification of ammonia dissolved in water into nitrite and the denitrification of nitrite in the liquid is more efficient.

Preferably, the liquid comprises a pH-value which is higher than -1, preferably higher than 0, more preferably higher than 1, even more preferably higher than 2, and even more preferably higher than 3. The liquid comprises a pH-value which is lower than 5.9; preferably, lower than 5.5; more preferably lower than 5, even more preferably lower than 4.5; and even more preferably lower than 4. In a preferred embodiment, the pH-value of the washing liquid is between 3 and 4, for example, 3.1, 3.2, 3.3, 3.4, 3.5, 3.6, 3.7, 3.8, 3.9 and all values in between. Said pH-value determines the speed of the conversion of nitrite, and is optimal between these values.

The washing liquid comprises sulfamic acid ($H_3NSO_3$), preferably the washing liquid comprises a concentration of sulfamic acid as a function of a desired pH-value of the washing liquid. Sulfamic acid offers the advantage that it is non-toxic and does not disturb the functioning of the essential biocatalysts, for example, the bacteria, in comparison with other acids such as sulfuric acid. In addition, sulfamic acid is little corrosive to the materials which are used in an air washer system, in particular for concrete. Using sulfamic acid is more environmentally friendly in comparison with other acids.

In a preferred embodiment, the adding of nitrite-converting substance and acid is controlled by different parameters such as the pH of the liquid, the amount of liquid, the concentration of nitrite in the liquid, the duration of the reaction period.

In a preferred embodiment, off-gas is formed which comprises a limited amount of nitrogen oxides and especially dinitrogen. The formed gas can either be conducted to the air, or be subjected to a post-purification, such as a compost or lime bed cleaning or be used as component in a combustion process. Under certain process conditions, limited amounts of nitrogen oxides may be present in the formed gas. These can be used, for example, to obtain a better combustion efficiency when burning hydrocarbons. Preferably, the nitrogen oxides are at least partially filtered out of the off-gas, preferably by directing the off-gas through a biologically active bed of limestone. This makes it possible to prevent the emission of nitrogen oxides (NOx).

In a preferred embodiment, the amount of discharge water is reduced preferably by 70%, more preferably by 90%, most preferably by 98% compared to a conventional air washer which is part of the prior art.

In a preferred embodiment, the nitrite-comprising washing water is chemically treated during a reaction period which is longer than 1 hour, preferably, longer than 6 hours, more preferably longer than 12 hours, even more preferably longer than 20 hours, and/or which is shorter than 5 days, preferably shorter than 4 days, more preferably shorter than 3 days, even more preferably shorter than 2 days. Most preferably, the reaction period is about 1 day or 24 hours. During this time, a sufficient amount of nitrite can be converted as a result of which the treated liquid has a nitrite concentration which does not cause an inhibition of the biological activity.

A system is described for the treatment of nitrite-comprising washing liquid coming from an air washer for removing ammonia from air flows. Preferably, said system comprises:

- a reactor having an in- and outlet for washing liquid, a supply system for adding chemicals required for the conversion of nitrite into nitrogen gas and an outlet for the formed off-gas;
- a circulation means to drain washing liquid out of the air washer into the reactor and re-add it to the air washer;
- a storage space for the nitrite-converting substance and acids used in the conversion of nitrite into nitrogen gas in connection with the reactor.

In a preferred embodiment, the system comprises a pH-control system which regulates the pH of the liquid in the reactor. Preferably, the supply of acid from the storage area to the liquid is hereby controlled in order to regulate the pH-value of the liquid and/or the washing liquid. Preferably, the pH control system comprises a pH-sensor to measure the pH of the liquid in the reactor and/or the washing liquid and a flow regulator to regulate the flow rate of acid to the liquid in the reactor.

In a preferred embodiment, the access for the nitrite-converting substance is directly connected to the reactor. In another preferred embodiment, the access for the nitrite-converting substance is provided in the air washer, wherein preferably the substance is sprayed into the air.

In a preferred embodiment, the air washer is of the biological type and it comprises the micro-organisms Nitrosomonas and/or Nitrobacter bacteria.

The invention is further clarified with reference to the following description, wherein reference is made to the accompanying drawing, wherein:

Figure 1 is a diagrammatical representation of a method according to the invention and of a system comprising a reactor (**2**) connected to an air washer (**1**) and optionally provided with a bed of limestone (**3**).

An air washer system (**1**) is connected, via a first side having an air inlet, to a supply of ammonia-comprising air, for example, air coming from fertilizer processing, biogas plants, composting processes, livestock farming or industrial processes. In this air, a strongly increased concentration of ammonia and other components is present, which needs to be separated from the air, mainly because of environmental requirements. The air washer system (**1**) is, at a second side, connected to a conduit with washing liquid. The washing liquid comprises, after passing through the air washer system, an increased concentration of waste materials, in particular in the form of particulate matter, as well as ammonia, ammonium, nitrite and nitrate, and leaves the air washer (**1**) at an outlet side. The washing liquid or a part thereof is then conducted to a reactor (**2**) where it will stay for about one day prior to returning to the air washer. In the reactor (**2**), a nitrite-converting substance, e.g. sulfamic acid, is added, or one or more reagents which are able to produce a nitrite-converting substance, e.g. a sulfamic salt, optionally together with an acid such as hydrochloric acid. As a result, the nitrite in the liquid is converted into nitrogen gases. Preferably, $CO_2$ is also added in a controlled manner to set the pH between 3 and 4.

The major part of the treated liquid from the reactor is recirculated and re-divided at the top of the air washer (**1**); periodically a small part can be discharged and replaced by fresh water. The water level is kept constant because of the supply of fresh water to compensate for evaporation and discharge of discharge water. In the present invention, the discharge of discharge water can be kept at a low level because of the efficient denitrification process and the production of off-gas with air nitrogen which escapes from the liquid, as a result, the supply of fresh water can also be kept as low as possible.

It should be noted that the use of air washers reduces the emission of ammonia and particulate matter, but a small amount of nitrogen oxides (NOx) can be released. Therefore, in a possible embodiment of the system, off-gas is directed through a bed of biologically active limestone (**3**). In this way, the nitrogen oxides emissions to the environment can be prevented, preferably with formation of Ca-nitrate.

The method according to the present invention can take place at room temperature, i.e. without additional heating or cooling of, for example, the washing liquid. The invention offers a further advantage that the odor emission is greatly reduced. Furthermore, the consumption of water is reduced, in particular because of a strong reduction of discharge water production. This has beneficial effects on the environment, on the costs associated to a daily use and the hindersome nature in general.

## Claims

1. Method for removing nitrite from a liquid, comprising the following steps:

    (a) providing nitrite-comprising liquid, coming from the oxidation of ammonia in an aqueous solution, wherein the ammonia in aqueous solution comes from washing ammonia-comprising air;
    (b) adding an amount of a nitrite-converting substance to the nitrite-comprising liquid, thereby converting nitrite into nitrogen gas, wherein the nitrite-converting substance comprises an amine group or amide group and a sulfamic group, and is capable of forming diazo compounds, wherein the liquid comprises a pH-value which is lower than 5.9, wherein the nitrite-converting substance is sulfamic acid or a salt thereof, and wherein the oxidation of ammonia in an aqueous solution is performed by micro-organisms.

2. Method according to claim 1 wherein the liquid comprises a pH-value between 3 and 4.

3. Method according to claim 1 or 2, comprising the following step:
    (c) re-using the treated liquid, preferably for washing said ammonia-comprising air.

4. Method according to one of the preceding claims, wherein the nitrite-comprising liquid comes from an air washer, such as a biological air washer, a chemical air washer, or a combination air washer, preferably a biological air washer.

5. Method according to one of the preceding claims, wherein an amount of the nitrite-converting substance is added to the ammonia-comprising air.

6. Method according to one of the preceding claims, wherein the nitrite-converting substance is added in a thereto provided reactor or in a system for washing ammonia-comprising air, preferably by spraying.

7. Method according to claim 6, wherein at least a part of the liquid remains in the reactor during a reaction period, preferably wherein the reaction period is between 2 and 48 hours.

8. Method according to one of the preceding claims, wherein an amount of nitrite-converting substance is added in a controlled manner and/or wherein the amount of added nitrite-converting substance is dependent on one or more parameters of the liquid, such as preferably the amount of liquid, the concentration of nitrite, the pH value, the duration of the reaction period, or a combination thereof.

9. Method according to one of the preceding claims wherein the ammonia-comprising air is coming from fertilizer processing, biogas plants, composting processes, livestock farming or industrial processes.

## Patentansprüche

1. Verfahren zum Entfernen von Nitrit aus einer Flüssigkeit, die folgenden Schritte umfassend:

(a) Bereitstellen einer Nitrit umfassenden Flüssigkeit, die aus der Oxidation von Ammoniak in einer wässrigen Lösung stammt, wobei das Ammoniak in wässriger Lösung vom Waschen von Ammoniak umfassenden Luft stammt;
(b) Zusetzen einer Menge einer Nitrit umwandelnden Substanz zu der Nitrit umfassenden Flüssigkeit, dadurch Umwandeln von Nitrit in Stickstoffgas, wobei die Nitrit umwandelnde Substanz eine Amingruppe oder Amidgruppe und eine Sulfamingruppe umfasst, und in der Lage ist, Diazoverbindungen zu bilden,

wobei die Flüssigkeit einen pH-Wert umfasst, der niedriger als 5,9 ist, wobei die Nitrit umwandelnde Substanz einen pH-Wert umfasst, der niedriger als 5,9 ist, wobei die Nitrit umwandelnde Substanz Sulfaminsäure oder ein Salz davon ist, und wobei die Oxidation von Ammoniak in einer wässrigen Lösung durch Mikroorganismen durchgeführt wird.

2. Verfahren nach Anspruch 1, wobei die Flüssigkeit einen pH-Wert zwischen 3 und 4 umfasst.

3. Verfahren nach Anspruch 1 oder 2, den folgenden Schritt umfassend:
(c) Wiederverwenden der behandelten Flüssigkeit, vorzugsweise zum Waschen der Ammoniak umfassenden Luft.

4. Verfahren nach einem der vorhergehenden Ansprüche, wobei die Nitrit umfassende Flüssigkeit aus einem Luftwäscher stammt, wie einem biologischen Luftwäscher, einem chemischen Luftwäscher, oder einem kombinierten Luftwäscher, vorzugsweise einem biologischen Luftwäscher.

5. Verfahren nach einem der vorhergehenden Ansprüche, wobei eine Menge der Nitrit umwandelnden Substanz der Ammoniak umfassenden Luft zugesetzt wird.

6. Verfahren nach einem der vorhergehenden Ansprüche, wobei die Nitrit umwandelnde Substanz in einem dafür bereitgestellten Reaktor oder in einem System zum Waschen von Ammoniak umfassenden Luft zugesetzt wird, vorzugsweise durch Einsprühen.

7. Verfahren nach Anspruch 6, wobei mindestens ein Teil der Flüssigkeit während einer Reaktionszeit in dem Reaktor verbleibt, vorzugsweise wobei die Reaktionszeit zwischen 2 und 48 Stunden beträgt.

8. Verfahren nach einem der vorhergehenden Ansprüche, wobei eine Menge an Nitrit umwandelnder Substanz auf gesteuerte Weise zugesetzt wird und/oder wobei die Menge an zugesetzter Nitrit umwandelnder Substanz von einem oder mehreren Parametern der Flüssigkeit abhängt, wie vorzugsweise der Flüssigkeitsmenge, der Konzentration von Nitrit, dem pH-Wert, der Dauer der Reaktionszeit, oder einer Kombination davon.

9. Verfahren nach einem der vorhergehenden Ansprüche, wobei die Ammoniak umfassende Luft aus der Düngemittelverarbeitung, aus Biogasanlagen, Kompostierprozessen, der Viehwirtschaft oder industriellen Prozessen stammt.

## Revendications

1. Procédé d'élimination du nitrite d'un liquide, comprenant les étapes suivantes :

(a) fournir un liquide comprenant du nitrite, provenant de l'oxydation d'ammoniac en solution aqueuse, dans

lequel l'ammoniac en solution aqueuse provient d'un lavage d'air comprenant de l'ammoniac;
(b) ajouter une quantité d'une substance de conversion de nitrite au liquide comprenant du nitrite, convertissant ainsi le nitrite en azote gazeux, dans lequel la substance de conversion de nitrite comprend un groupe amine ou un groupe amide et un groupe sulfamique, et est capable de former des composés diazo,

dans lequel le liquide comprend une valeur de pH qui est inférieure à 5,9, dans lequel la substance de conversion de nitrite est l'acide sulfamique ou un sel de celui-ci, et dans lequel l'oxydation de l'ammoniac dans une solution aqueuse est effectuée par des micro-organismes.

**2.** Procédé selon la revendication 1, dans lequel le liquide comprend une valeur de pH entre 3 et 4.

**3.** Procédé selon la revendication 1 ou 2, comprenant l'étape suivante :
(c) réutiliser le liquide traité, de préférence pour laver ledit air comprenant de l'ammoniac.

**4.** Procédé selon l'une quelconque des revendications précédentes, dans lequel le liquide comprenant du nitrite provient d'un laveur d'air, tel qu'un laveur d'air biologique, un laveur d'air chimique, ou un laveur d'air combiné, de préférence un laveur d'air biologique.

**5.** Procédé selon l'une quelconque des revendications précédentes, dans lequel une quantité de la substance de conversion de nitrite est ajoutée à l'air comprenant de l'ammoniac.

**6.** Procédé selon l'une quelconque des revendications précédentes, dans lequel la substance de conversion de nitrite est ajoutée dans un réacteur fourni à cet effet ou dans un système de lavage d'air comprenant de l'ammoniac, de préférence par pulvérisation.

**7.** Procédé selon la revendication 6, dans lequel au moins une partie du liquide reste dans le réacteur pendant une période de réaction, de préférence dans lequel la période de réaction est comprise entre 2 et 48 heures.

**8.** Procédé selon l'une quelconque des revendications précédentes, dans lequel une quantité de substance de conversion de nitrite est ajoutée de manière contrôlée et/ou dans lequel la quantité de substance de conversion de nitrite ajoutée dépend d'un ou de plusieurs paramètres du liquide, tels que de préférence la quantité de liquide, la concentration en nitrite, la valeur du pH, la durée de la période de réaction, ou une combinaison de ceux-ci.

**9.** Procédé selon l'une quelconque des revendications précédentes, dans lequel l'air comprenant de l'ammoniac provient de la transformation d'engrais, d'installations de biogaz, de procédés de compostage, de l'élevage ou de procédés industriels.

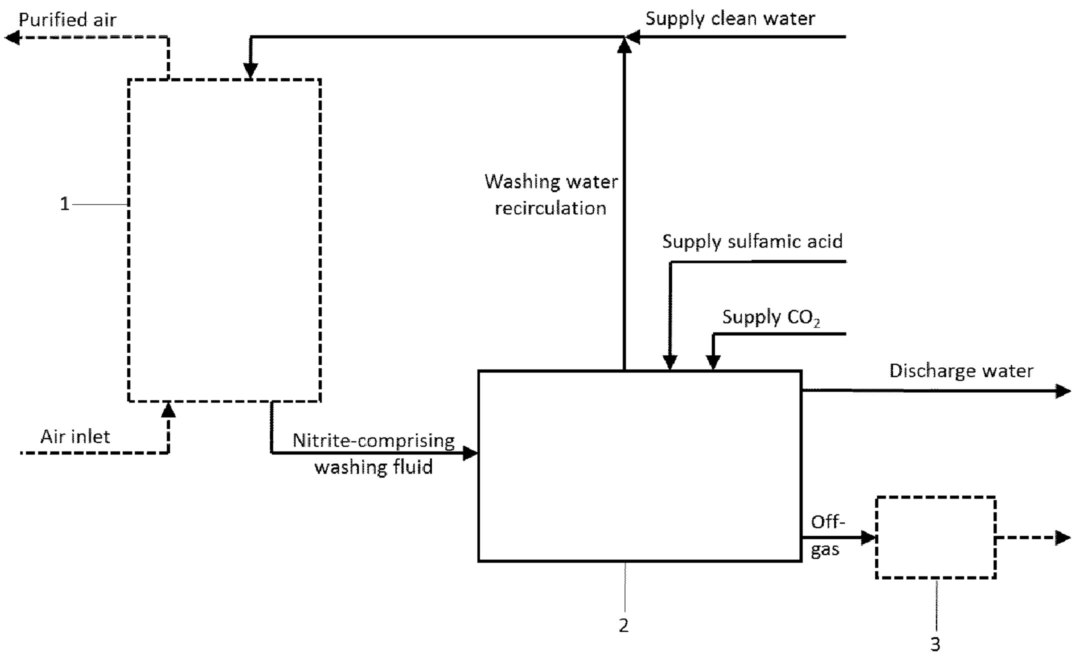
Purified air
Supply clean water
1
Washing water
recirculation
Supply sulfamic acid
Supply CO2
Discharge water
Air inlet
Nitrite-comprising
washing fluid
Off-
gas
2
3

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2308583 A
- JP 2005161258 A
- DE 202011000946 U1
- CN 101481170 A
- US 4968436 A
- GB 2171688 A